(19) Europäisches Patentamt
European Patent Office
Office européen des brevets

(11) **EP 1 470 987 B1**

(12) **EUROPEAN PATENT SPECIFICATION**

(45) Date of publication and mention
of the grant of the patent:
**17.03.2010 Bulletin 2010/11**

(51) Int Cl.:
***B62D 5/04*** *(2006.01)*  ***B62D 6/00*** *(2006.01)*

(21) Application number: **03700482.7**

(86) International application number:
**PCT/JP2003/000067**

(22) Date of filing: **08.01.2003**

(87) International publication number:
**WO 2003/059719 (24.07.2003 Gazette 2003/30)**

(54) **ELECTRIC POWER STEERING APPARATUS CONTROL APPARATUS**

STEUERVORRICHTUNG FÜR ELEKTRISCHE SERVOLENKVORRICHTUNG

APPAREIL DE COMMANDE D'APPAREIL DE DIRECTION ASSISTEE ELECTRIQUE

(84) Designated Contracting States:
**AT BE BG CH CY CZ DE DK EE ES FI FR GB GR HU IE IT LI LU MC NL PT SE SI SK TR**

(30) Priority: **09.01.2002 JP 2002001935**

(43) Date of publication of application:
**27.10.2004 Bulletin 2004/44**

(73) Proprietor: **NSK Ltd.**
**Tokyo 141-8560 (JP)**

(72) Inventors:
• **ENDO, Shuji,**
**NSK LTD.**
**Maebashi-Shi,**
**Gunma 371-8527 (JP)**

• **RIJANTO, Estiko,**
**NSK LTD.**
**Maebashi-Shi, Gunma 371-8527 (JP)**
• **CHEN, Hui,**
**NSK LTD.**
**Maebashi-S hi,**
**Gunma 371-8527 (JP)**

(74) Representative: **Hirsch, Peter**
**Klunker Schmitt-Nilson Hirsch**
**Patentanwälte**
**Destouchesstrasse 68**
**80796 München (DE)**

(56) References cited:
EP-A- 1 077 171    EP-A- 1 138 578
EP-A1- 1 127 775    EP-A1- 1 129 926
DE-A1- 19 615 377    JP-A- 2001 213 340
JP-A- 2001 233 232    JP-A- 2001 239 952

**Description**

Technical Field

The present invention relates to a power steering apparatus for steering a wheel for steering of an automotive vehicle in accordance with a driver's operation and particularly to an electric power steering apparatus which can independently design treatments of, for example, road surface information and disturbance information and steering safety and also can obtain a safe, comfortable steering performance which is easily tunable.

Background Art

Steering of an automotive vehicle is performed by transmitting an operation (ordinarily a rotation operation of a steering wheel) of a steering device provided inside a vehicle compartment to a steering mechanism provided outside the vehicle compartment for performing a turning maneuver in the direction of a wheel (ordinarily, front wheel) for steering.

As for such steering mechanisms for automotive vehicles, various types of steering mechanisms such as a ball screw type and a rack-pinion type have been in practical use. For example, the steering mechanism of the rack-pinion type, which is configured such that sliding in an axial direction of a rack shaft extended in a right-and-left direction at a front portion of a vehicle body is transmitted to each of right and left front wheels via a tie-rod and a knuckle arm provided thereto, is constituted such that a pinion, which is fit into a tip end of a rotation shaft (steering column) of the steering wheel extending to outside the vehicle compartment, is meshed with a rack gear formed in a middle section of the rack shaft and, then, the rotation of the steering wheel is converted into sliding in an axial direction of the rack shaft, to thereby perform steering in accordance with a rotation operation of the steering wheel.

Further, in recent years, a power steering apparatus, which is constituted such that an actuator for a steering assistance such as a hydraulic cylinder or an electric motor is provided in a middle section of the steering mechanism, the actuator is driven in accordance with a detection result of a steering force to be added to the steering wheel for steering, a movement (drive) of the steering mechanism in accordance with the rotation of the steering wheel is assisted by an output from the actuator and, then, a labor load of a driver is alleviated, has widely been applied.

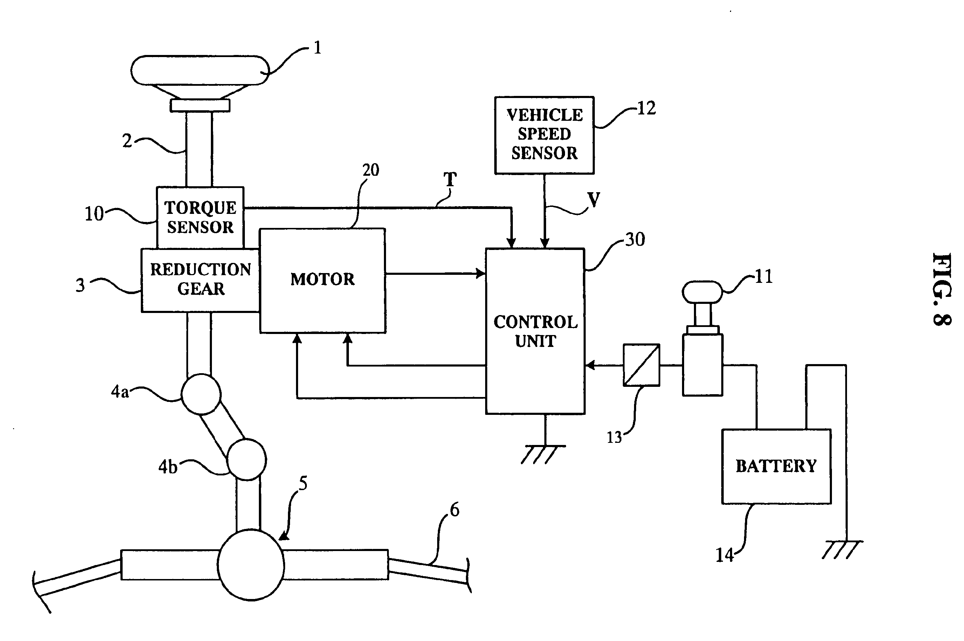

Now, an ordinary constitution of the electric power steering apparatus is described with reference to FIG. 8. A shaft 2 of a steering wheel 1 is connected with a tie-rod 6 of a direction-maneuvering wheel via a reduction gear 3, universal joints 4a and 4b, and a pinion-rack mechanism 5. A torque sensor 10 for detecting a steering torque is provided to the shaft 2. A motor 20 for assisting the steering force of the steering wheel 1 is connected to the shaft 2 via the reduction gear 3. A control unit 30 for controlling the power steering apparatus, which is supplied with an electric power from a battery 14 via an ignition key 11 and a relay 13, computes a steering assisting command value I of an assisting command based on a steering torque T detected by the torque sensor 10 and a vehicle speed V detected by a vehicle speed sensor 12 and, then, the electric current to be supplied to the motor 20 is controlled based on the thus-computed steering assisting command value I.

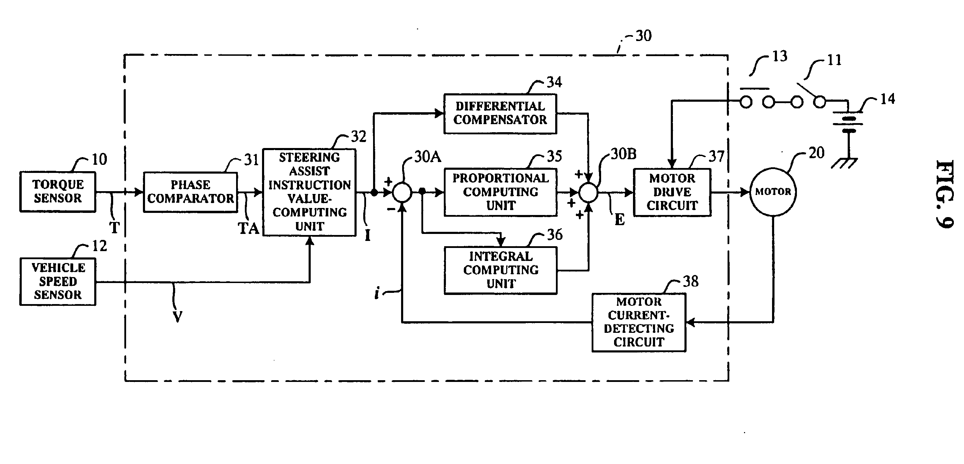

The control unit 30 is mainly constituted by a CPU. An ordinary function to be executed by a program in the CPU is shown in FIG. 9.

The function and an operation of the control unit 30 is now described. The steering torque T to be inputted after detected by the torque sensor 10 is phase-compensated by a phase-compensating device 31 for enhancing stability of a steering system and the thus-phase-compensated steering torque TA is inputted to a steering assisting command value computing device 32. Further, the vehicle speed V detected by the vehicle sped sensor 12 is also inputted to the steering assisting command value computing device 32. The steering assisting command value computing device 32 determines the steering assisting command value I which is a control target value of the electric current to be supplied to the motor 20 based on the inputted steering torque TA and the vehicle speed V. The steering assisting command value I is not only inputted to a subtracting device 30A but also supplied to a differential compensating device 34 of a feed-forward system for enhancing a response speed and, then, deviation (I-i) of the subtracting device 30A is not only inputted to a proportional computing device 35 but also inputted to an integral computing device 36 of a feedback system for improving characteristics thereof. The output from each of the differential compensating device 34 and the integral computing device 36 is inputted to an adding device 30B in an addition manner and, then, an electric control value E which is a result of such addition in the adding device 30B is inputted to a motor drive circuit 37 as a motor drive signal. A motor electric current value i of the motor 20 is detected by a motor electric current detecting circuit 38 and, then, the thus-detected motor electric current value i is inputted to the subtracting device 30A, to thereby be fed back.

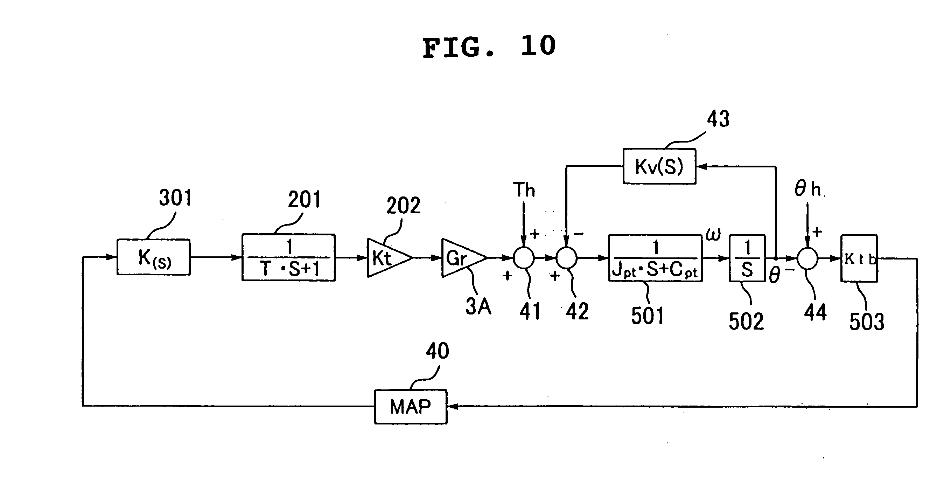

On the other hand, the mechanism as shown in FIG. 8 is shown in FIG. 10 in terms of a transfer function. In FIG. 10, a block 301 is a transfer function K(s) of the control unit 30, a block 201 is a transfer function of the motor 20 which has characteristics of primary lag function, and a block 202 indicates a torque coefficient $K_t$ of the motor 20. A block 3A is a gear ratio $G_r$ of the reduction gear 3, and an output from the gear ratio $G_r$ and a steering torque Th are inputted to a adding device 41 and, through an subtracting device 42, inputted to a transfer function 501 of the pinion-

**EP 1 470 987 B1**

rack mechanism 5. An angular speed $\omega$ which is an output from a transfer function 501 becomes an angle $\theta$ by passing through an integral factor 502 and, then, the angle $\theta$ is fed back to the subtracting device 42 through a block 43 of dynamic characteristics Kv(s) of the vehicle. Further, the angle $\theta$ is inputted to a subtracting device 44 together with a steering wheel angle $\theta_h$ and, then, an subtraction result thereof is inputted, via a spring coefficient ($K_{tb}$) 503 of a torsion bar, to an MAP 40 corresponding to the steering assisting command value computing device 32 and, thereafter, an output from the MAP 40 is inputted to the control unit 301.

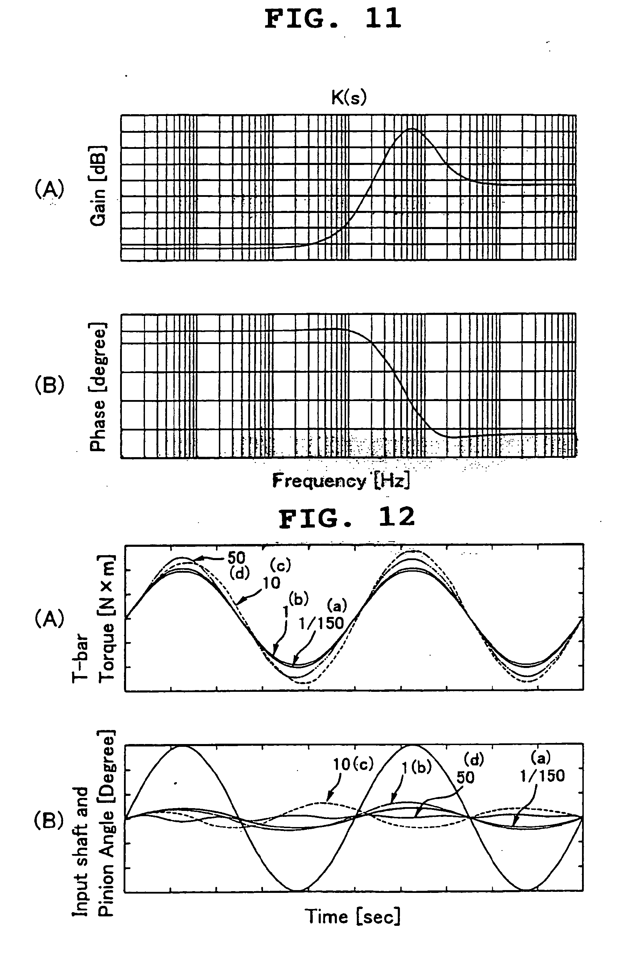

Frequency response characteristics of the control unit 301 is shown in FIG. 11, in which FIG. 11(A) shows gain characteristics, while FIG. 11(B) shows phase characteristics. Further, torque characteristics of the torsion bar is shown in FIG. 12(A), while the angle is shown in FIG. 12(B). These change in accordance with gains 1/150, 1, 10 and 50 of the MAP 40 as shown in (a), (b), (c) and (d), respectively. FIG. 12 shows results of performing tuning as shown in FIG. 10 which show states of angles at the time of changing the gain of MAP 40 of the feedback signal by 1/150, 1, 10, and 50. From these results, it is found that, since there is no substantial difference among results obtained by the gains 1/150, 1, 10 and 50, it is difficult to perform tuning.

A conventional electric power steering apparatus is configured such that it can simultaneously design stability of a system and a treatment against road surface information and disturbance information by a robust stabilization compensating device. The robust stabilization compensating device is a compensating device as described in, for example, JP-A No. 8-290778 which has a characteristic formula represented by $G(s)=(s^2+a1 \cdot s+a2)/(s^2+b1 \cdot s+b2)$ in which s represents a Laplace operator, removes a peak value of resonance frequency of a resonance system comprising an inertia factor and a spring factor contained in the steering torque T and compensates a phase deviation of the resonance frequency which inhibits the stability and response of the control system.

However, it is difficult, from a standpoint of tuning, to treat a plurality of information and signals in a plurality of frequency bands by a single compensating device. Particularly, when mechanical or electric characteristics is changed even to a small extent, there is a problem in that it takes longer time in tuning. Further, unless by a fairly experienced engineer, there is a problem in that an apparatus of same performance can not be obtained.

EP 1 138 578 A is directed to a control unit for an electrical-motor-driven power steering apparatus, according to which there are provided an assist current command value (31) calculated based upon a steering torque (4) of a steering wheel, an assist current control value (38) calculated based upon a motor current value (18) of a motor and the assist current command value. A motor outputs an assist force based upon the assist current control value. Further, the control unit provides an estimation means (21) for estimating a road surface $\mu$ based upon at least one of the motor current value and the steering torque.

The present invention has been accomplished under these circumstances and an object of the present invention is to provide an electric power steering apparatus which is easily tunable, constituted at a low cost and can obtain a safe, comfortable steering feeling. The invention relates to apparatuses according to claims 1 and 2.

Disclosure of the Invention

Particularly, the present invention relates to an electric power steering apparatus which controls a motor that gives a steering assisting force to a steering mechanism based on an electric current controlling value which is computed from a steering assisting command value which has been computed by a computing device based on a steering torque generated in a steering shaft and an electric current value of the motor and the stated object of the present invention can be attained by being provided with a self-aligning torque estimating section which estimates a self-aligning torque by a disturbance observer constitution and a steering torque feedback section which performs definition of a steering reaction force based on a self-aligning torque estimated value which has been estimated by the self-aligning torque estimating section and feeds the steering reaction force back to the steering torque.

Brief Description of the Drawings

FIG. 1 is a block diagram showing an example of a constitution (transfer function) of an electric power steering apparatus of feedback control system using an SAT and a steering torque according to the present invention;
FIG. 2 is a view showing an example of a frequency response of a control unit;
FIG. 3 is a diagram showing an example of frequency characteristics of an SAT estimating section;
FIG. 4 is a view showing an example of characteristics of a static characteristic sub-section of a feeling characteristic section;
FIG. 5 is a view showing an example of characteristics of a dynamic characteristic sub-section of a feeling characteristic section;
FIG. 6 is a view explaining an effect according to the present invention;

FIG. 7 is a view explaining an effect according to the present invention;

FIG. 8 is a view showing a mechanism of an ordinary electric power steering apparatus;

FIG. 9 is a block diagram showing an example of a constitution of a control unit of an electric power steering apparatus;

FIG. 10 is a block diagram showing a transfer function system of the power steering apparatus as shown in FIG. 8;

FIG. 11 is a view showing frequency characteristics of a conventional control unit; and

FIG. 12 is a view showing conventional torsion bar characteristics.

Best Mode for Carrying Out the Invention

According to the present invention, a self-aligning torque estimating section for estimating a self-aligning torque by a disturbance observer constitution is provided and, then, definition of a steering reaction force is performed based on a self-aligning torque estimated value which has been estimated by the self-aligning torque estimating section and a motor rotation (angle) signal or angular speed signal and, thereafter, the steering reaction force is fed back to a steering torque. Further, according to the present invention, the self-aligning torque is estimated and the resultant self-aligning torque estimated value is fed back to the steering torque together with torque information of a torsion bar. A control unit according to the present invention has a robust property in that stability of a system can be secured regardless of fluctuations of characteristics (for example, resonance frequency) of the system. Still further, the definition of static characteristics of the steering reaction force is determined based on a necessary steering force and the self-aligning torque estimated value and the definition of dynamic characteristics of the steering reaction force is performed such that a gain of transfer function in a frequency band of information which is desirous to be conveyed to a driver is allowed to be large while the gain of transfer function in the frequency band of information which is not desirable to be conveyed to the driver is allowed to be small. For this account, the definition of necessary steering reaction force can easily be performed and a low-cost constitution and a stable, comfortable steering feeling can be realized.

Furthermore, since a motor rotation angle signal (or a motor angular speed signal) and a motor electric current command value are allowed to be used for estimating the self-aligning torque, a constitution of the self-aligning torque estimating section of high precision and low-cost can be realized by using the motor rotation angle signal (or the motor angular speed signal) used for controlling the motor.

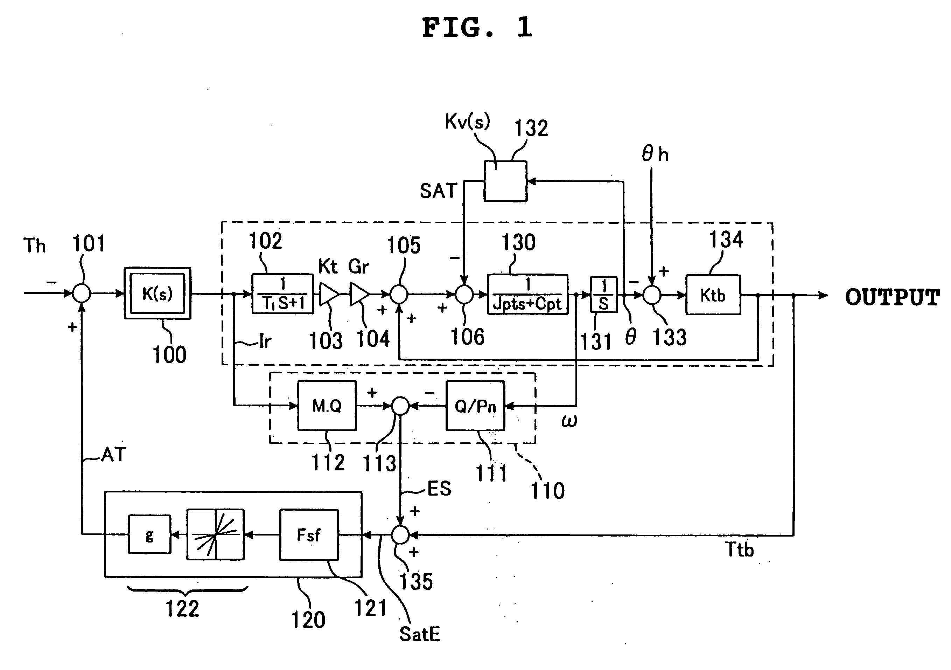

FIG. 1 shows an example of a constitution in a block diagram according to the present invention, in which a steering torque Th is inputted in a control unit 100 (transfer function: K(s)) and, then, a motor electric current command value Ir which is an output therefrom is inputted in an adding device 105 via a motor 102 (transfer function:$1/(T1 \cdot s+1)$) of first order lag function, a torque function 103 (transfer function: $K_t$) of the motor and a gear ratio 104 (transfer function: $G_r$) of a reduction gear. The addition result of the adding device 105 is inputted in a pinion-rack mechanism 130 (transfer function: $1/(J_{pt} \cdot S + C_{pt})$ via a subtracting device 106. A motor angular speed w which is an output from the pinion-rack mechanism 130 is converted into an angle θ by passing through an integral factor 131 and the thus-converted angle θ is fed back to the subtracting device 106 via dynamic characteristics 132 (transfer function: Kv(s)) of a vehicle. The Jpt of the pinion-rack mechanism 130 is a pinion-base inertial moment, while the Cpt thereof is a pinion-base damping coefficient. Further, the angle θ is inputted to a subtracting device 133 together with a steering wheel angle $θ_h$ and, then, the subtraction result therein is inputted in an adding device 135 via a spring coefficient 134 (transfer function: $K_{tb}$) of the torsion bar, while a self-aligning torque estimated value ES is also inputted to the adding device 135 from a self-aligning torque estimating section 110. The self-aligning torque estimating section 110 performs an estimation of a self-aligning torque (SAT) from the motor electric current command value Ir and the motor angular speed ω, and a steering torque feedback section 120 which performs a definition of a steering reaction force (complementary component) AT based on the self-aligning torque estimated value ES which has been estimated by the self-aligning torque estimating section 110 and feeds the steering reaction force back to the steering torque Th via a subtracting device 101 is provided.

The self-aligning torque estimating section 110 comprises a factor 111 (Q/Pn) in which the motor angular speed ω is inputted and treated and a factor 112 (M·Q) in which the motor electric current command value Ir is inputted and treated, is allowed to determine a deviation between the output of the factor 111 and the output of the factor 112 by a subtracting device 113 and, then, outputs the result(the deviation) as the self-aligning torque estimated value ES. Q(s) indicates a low-pass filter, while Pn(s) indicates a theoretical model of rack-pinion. The factor 111 is constituted by a transfer function Q(s) and a transfer function $Pn^{-1}$, while M indicates a transfer function ($=1/(T_1 \cdot s+1)$) which, then, forms the factor 112 by being multiplied by Q(s).

The M·Q of the factor 112 is a product of an electric characteristic M of the motor and a low-pass filter Q, while the Q/Pn of the factor 111 is a quotient obtained by dividing the low-pass filter Q by an ideal model Pn. The basis on which the self-aligning torque estimating section 110 can compute the self-aligning estimated torque value ES is as described below. A torque Tm is represented by the following formula (1):

$$Tm=M(s)xIr \qquad (1)$$

wherein M(s)=(KtxGr)/(T1·s+1).

Further, the motor angular speed ω is represented by the following formula (2):

$$\omega=P(s)x[Tm+Ttb-SAT] \qquad (2)$$

wherein P(s)=1/(Jpt·s+Cpt)

Still further, based on a constitution of the self-aligning torque estimating section 110, the self-aligning estimated value ES is represented by the following formula (3):

$$ES=M·Q-Q/Pn \qquad (3)$$

Therefore, when the formula (3) is substituted by the formulae (1) and (2), the result comes to be as follows:

$$ES \quad =Q(s)xTm-Q(s)xP(s)x[Tm+Ttb-SAT]/Pn(s)$$

$$=\{Q(s)xTm-Q(s)x[P(s)/Pn(s)xTm]\}$$

$$x\{Q(s)x[P(s)/Pn(s)]x[SAT-Ttb]\} \qquad (4)$$

Further, when the pinion-base inertial moment Jpt and pinion-base damping coefficient Cpt value of the pinion-rack mechanism 130 are determined such that the relation of Pn(s)=P(s) is held, the following relation can be obtained:

$$ES=Q(s)x[SAT-Ttb] \qquad (5)$$

Therefore, since the addition result of the adding device 135 is inputted in the steering feedback section 120, the following formula (6) can be obtained:

$$SatE \quad =ES+Ttb$$

$$= Q(s)xSAT+[1-Q(s)]xTtb \qquad (6)$$

Therefore, in the range in which Q(s)=1, the following formula can be obtained:

$$SatE=SAT \qquad (7)$$

From the above description, the relation between the self-aligning torque SAT and the self-aligning torque estimated value ES is represented by the formula (5), while a relation between the self-aligning torque SAT and the addition result SatE is represented by the formula (7).

Further, the filter Q, the motor characteristics M and characteristics of the model Pn can be represented by respective formulae as described below.

When the filter Q(s) uses the angular speed ω and, also, Tq is a time constant, the Q(s) is represented by the

following formula:

$$Q(s)=1/(Tq \cdot s+1) \qquad (8)$$

When it uses the angle θ and, also, b0 and b1 are each a constant, the Q(s) is represented by the following formula:

$$Q(s)=b1/(s^2+b0 \cdot s+b1) \qquad (9)$$

Each of them(8) (9) shows a high-cutoff filter. Further, the motor characteristics M(s) and model P(s) can be represented by the following formulae:

$$M(s)=KtxGr/(T1 \cdot s+1) \qquad (10)$$

$$P(s)=1/(Jpn \cdot s+Cpn) \qquad (11)$$

As described above, the addition result SatE is inputted to the steering feedback section 120, while the deviation (AT-Th) between the steering torque Th and the steering reaction force AT which is an output from the steering feedback section 120 are inputted to the control unit 100 and, in the present control system, the steering torque Th and the SAT information are utilized for the feedback control.

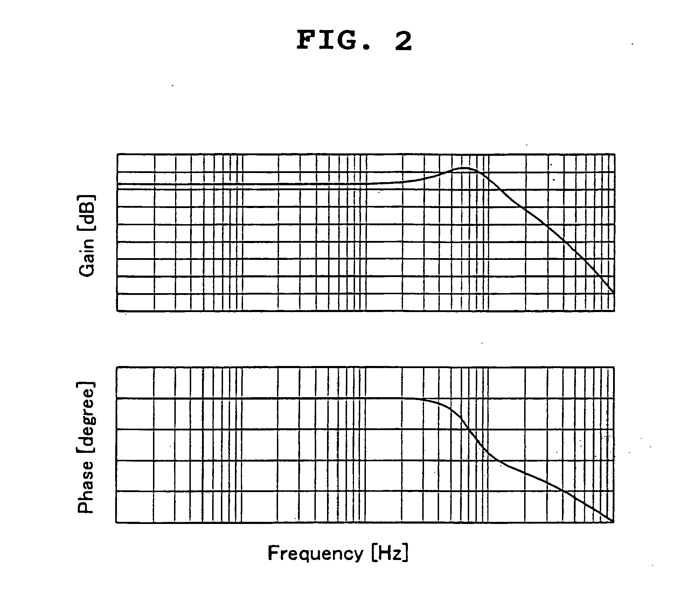

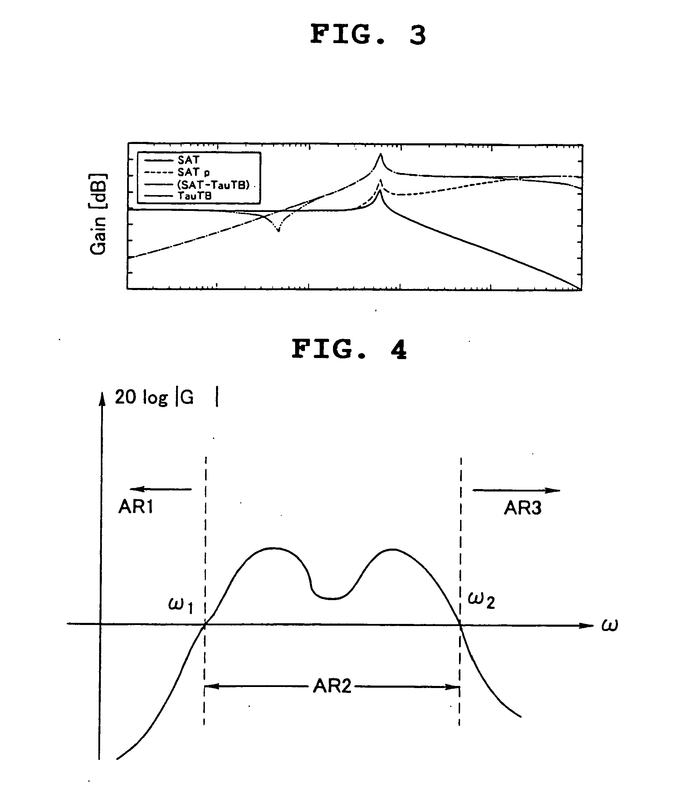

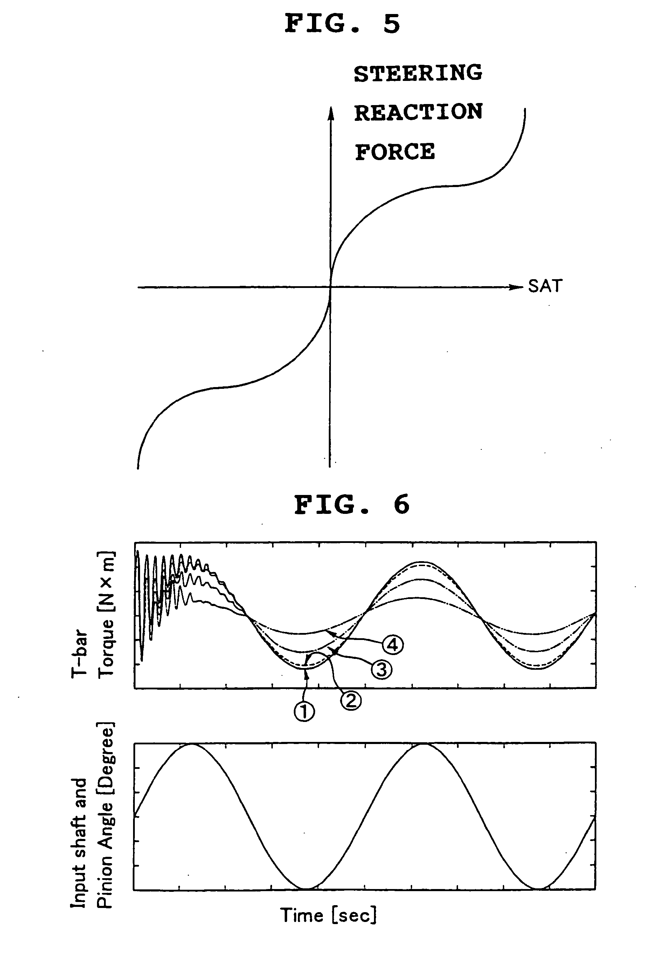

Further, according to the present invention, characteristics of the control unit 100 are allowed to be gain and phase characteristics as shown in FIG. 2 without containing an integral factor and, accordingly, they become a proportional factor in a low frequency range and cutoff characteristics in a high frequency range. Characteristics of the self-aligning torque estimating section 110 are allowed to be those as shown in FIG. 3. In FIG. 3, the actual self-aligning torque SAT (solid line) and the estimated self-aligning torque ES (broken line) are shown. Further, the steering torque feedback section 120 comprises a dynamic characteristic sub-section 121 and a static characteristic sub-section 122. The dynamic constituting sub-section 121 has characteristics as shown in FIG. 4, while the static characteristic sub-section 122 has characteristics as shown in FIG. 5. The static characteristic sub-section 122 has a function of a feeling characteristic section such that it gives a complementary effect to a torque which a driver feels and, in the present example, is separated into a function block of showing a gain g and a function block of showing a curve pattern. In FIG. 4, a range AR2 (angular frequency from $\omega_1$ to $\omega_2$) indicates a frequency band of information which is desirous to be conveyed to a driver, while ranges AR1 (angular frequency of $\omega_1$ or less) and AR3 (angular frequency of $\omega_2$ or more) each indicate a frequency band of disturbance information which is desirous to be suppressed. Although FIG. 5 shows static characteristics to be targeted, the gain g is actually fluctuated in an appropriate range (1/150, 1, 10 and 50) so as to cover characteristics as shown in FIG. 5.

In a constitution as described above, the deviation (AT-Th) between the steering torque Th and the steering reaction force AT which is an output from the steering torque feedback section 120 is obtained by the subtracting device 101 and the deviation (AT-Th) is inputted in the control unit 100 and, then, the motor electric current command value Ir which is an output therefrom not only drives the motor 102 but also is inputted in the self-aligning torque estimating section 110 of a disturbance observer constitution. The control unit 100 compensates stability of an entire system and has robust characteristics by securing the stability of the entire system regardless of fluctuations of characteristics (for example, resonance frequency) of the system. Determination of the transfer function K(s) of the control unit 100 may either be performed by PID or a try-and-error method.

An output of the motor 102 is inputted in the adding device 105 via the motor torque coefficient 103 (Kt) and the gear ratio 104 (Gr), the resultant addition value is inputted in the pinion-rack mechanism 130 (1/(Jpt·s+Cpt)) via the subtracting device 106. An output from the pinion-rack mechanism 130 is inputted in the subtracting device 133 via the integral factor 131 (1/s) and the output of the integral factor 131 is inputted in the factor 132 which indicates dynamic characteristics of the vehicle, the self-aligning torque SAT which is an output therefrom is inputted in the subtracting device 106. Further, the addition result in the subtracting device 133 is outputted via the spring coefficient 134 (Ktb) of the torsion bar.

An output Ttb from the spring coefficient 134 (Ktb) is not only inputted in the adding device 135 but also fed back to the adding device 105, while the motor angular speed ω which is an output from the pinion-rack mechanism 130 is inputted in the self-aligning torque estimating section 110. Then, the self-aligning torque estimated value ES from the self-aligning estimating section 110 is inputted in the steering torque feedback section 120 via the adding device 135. The steering torque feedback section 120 comprises the dynamic characteristic sub-section 121 and the static characteristic sub-section 122 of feeling characteristics of torque which a human being feels.

According to the present invention, the self-aligning torque for the electric power steering and the feedback control system using the steering torque are utilized and the control unit 100 of the feedback, being characterized by the frequency characteristics (gain and phase)in Fig.2, has no integral factor but has proportional characteristics in a low frequency range and cutoff characteristics in a high frequency range. The steering torque Th is measured by a torque sensor of the torsion bar, while the self-aligning torque SAT is not measured but is estimated by the self-aligning torque estimating section 110 of the observer constitution. The thus-estimated self-aligning torque ES and the measured self-aligning torque SAT come to be those as shown in FIG. 3.

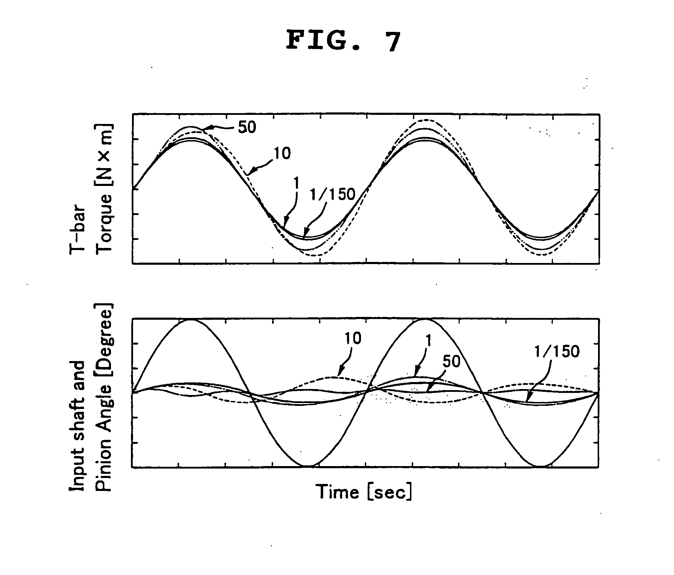

The result of the characteristics K(s) of the control unit 100 applied to the case of FIG. 2 come to be those as shown in FIG. 6; the feature thereof is favorable. It is found that, compared with the characteristics indicating the result of the conventional apparatus, the difference caused by the change of the gain comes to be large and, accordingly, tuning is easily performed. By contrast, when the characteristics K(s) of the control unit 100 is applied to the case of FIG. 3, the results come to be those as shown in FIG. 7; it is found that the feature thereof is unfavorable. Namely, in FIG. 7, when the gain g is changed, the torque of the torsion bar is changed but the pinion angle is largely changed and, accordingly, a following response property of the steering is deteriorated and it also becomes difficult to perform tuning. In FIG. 6, when the gain g is changed, the torque of the torsion bar is changed in a regular manner and, moreover, since the pinion angle is not largely changed, the following response property of the steering is not deteriorated and, accordingly, it is easy to perform tuning.

In the aforementioned example, the angular speed ω is used for the self-aligning torque estimation. However, it is also possible to perform estimation thereof by using the angle.

Industrial Applicability

According to a power steering apparatus of an automotive vehicle according to the present invention, treatments of road surface information, disturbance information and the like and designing of steering stability can independently be designed, to thereby being capable of providing a low-cost constitution, easy tuning, and a stable, comfortable steering feeling.

**Claims**

1. An electric power steering apparatus, which controls a motor (20) that gives a steering assisting force to a steering mechanism based on an electric current controlling value which is computed from a motor electric current command value (Ir) which has been computed by a computing device based on a steering torque generated in a steering shaft (2) and an electric current value of the motor, and comprises
   a self-aligning torque estimating section (110) which estimates a self-aligning torque (ES) by a disturbance observer constitution and
   a steering torque feedback section (120) which computes a steering reaction force (AT) based on the self-aligning torque estimated value (ES) which has been estimated by the self-aligning torque estimating section (110) and feeds the result back to the steering torque,
   said electric power steering apparatus is **characterized in that**:

   the definition of dynamic characteristics of the steering reaction force (AT) of the steering torque feedback section (120) is performed such that a gain of a transmission function in a frequency band of information which is desirable to be conveyed to a driver is allowed to be large, while the gain of the transmission function in the frequency band of information which is not desirable to be conveyed to the driver is allowed to be small.

2. An electric power steering apparatus, which controls a motor (20) that gives a steering assisting force to a steering mechanism based on an electric current controlling value which is computed from a motor electric current command value (Ir) which has been computed by a computing device based on a steering torque generated in a steering shaft (2) and an electric current value of the motor, and comprises
   a self-aligning torque estimating section (110) which estimates a self-aligning torque (ES) from a motor rotation signal or an angular speed signal (ω) and the motor electric current command value (Ir) and

a steering torque feedback section (120) which computes a steering reaction force AT based on the self-aligning torque estimated value (ES) which has been estimated by the self-aligning torque estimating section (110) and feeds the result back to the steering torque,

said electric power steering apparatus is **characterized in that**:

the definition of dynamic characteristics of the steering reaction force AT of the steering torque feedback section (120) is performed such that a gain of a transmission function in a frequency band of information which is desirable to be conveyed to a driver is allowed to be large, while the gain of the transmission function in the frequency band of information which is not desirable to be conveyed to the driver is allowed to be small.

3. The electric power steering apparatus as set forth in claim 1 or 2, wherein definition of static characteristics of the steering torque feedback section (120) is determined based on the steering reaction force AT and the self-aligning torque estimated value.

4. The electric power steering apparatus as set forth in any one of Claims 1 to 3, wherein a characteristic of a controller into which a deviation between the steering torque and an output from the steering torque feedback section is inputted is allowed to be a proportional factor in a low range and a cutoff factor in a high range, without containing an integral factor.

**Patentansprüche**

1. Elektrische Servolenkvorrichtung, die einen Motor (20) steuert, welcher eine Lenkhilfskraft an einen Lenkmechanismus abgibt, basierend auf einem Steuerungswert für elektrischen Strom, welcher aus einem elektrischen Motorstrom-Befehlswert (Ir) berechnet wird, welcher durch eine Rechenvorrichtung basierend auf einem in einer Lenkwelle (2) erzeugten Steuerungsdrehmoment sowie einem elektrischen Stromwert des Motors berechnet worden ist, und aufweisend:

einen Ausgleichsdrehmoment-Abschätzungs-Abschnitt (110), welcher mittels einer Störgrößen-Beobachteranordnung ein Ausgleichsdrehmoment (ES) abschätzt, sowie

einen Lenkungsdrehmoment-Rückkopplungs-Abschnitt (120), welcher eine Lenkreaktionskraft (AT) basierend auf dem abgeschätzten Ausgleichsdrehmomentwert (ES) berechnet, der durch den Ausgleichsdrehmoment-Abschätzungs-Abschnitt (110) abgeschätzt worden ist, und der das Ergebnis an das Lenkungsdrehmoment rückkoppelt,

wobei die elektrische Servolenkvorrichtung **gekennzeichnet ist dadurch**:

dass die Bestimmung dynamischer Kennwerte der Lenkreationskraft (AT) des Lenkdrehmoment-Rückkopplungs-Abschnittes (120) dermaßen durchgeführt wird, dass einem Verstärkungsfaktor einer Übertragungsfunktion in einem Frequenzband von Informationen, für das es wünschenswert ist, an den Fahrer weitergeleitet zu werden, erlaubt wird, groß zu werden, wohingegen der Verstärkungsfaktor der Übertragungsfunktion in dem Frequenzband von Informationen, für das es nicht wünschenswert ist, an den Fahrer weitergeleitet zu werden, erlaubt wird, klein zu sein.

2. Elektrische Servolenkvorrichtung, welche einen Motor (20) steuert, welcher eine Lenkhilfskraft an einen Lenkmechanismus abgibt, basierend auf einem Steuerungswert für elektrischen Strom, welcher aus einem elektrischen Motorstrom-Befehlswert (Ir) berechnet wird, welcher durch eine Rechenvorrichtung basierend auf einem in einer Lenkwelle (2) erzeugten Steuerungsdrehmoment sowie einem elektrischen Stromwert des Motors berechnet worden ist, und aufweisend:

einen Ausgleichsdrehmoment-Abschätzungs-Abschnitt (110), der ein Ausgleichsdrehmoment (ES) aus einem Motordrehsignal oder einem Winkelgeschwindigkeitssignal (ω) und dem elektrischen Motorstrom-Befehlswert abschätzt, und

einem Lenkungsdrehmoment-Rückkopplungs-Abschnitt (120), welcher eine Lenkreaktionskraft (AT) basierend auf dem abgeschätzten Ausgleichsdrehmomentwert (ES) berechnet, der durch den Ausgleichsdrehmoment-Abschätzungs-Abschnitt (110) abgeschätzt worden ist, und der das Ergebnis an das Lenkungsdrehmoment rückkoppelt,

wobei die elektrische Servolenkvorrichtung **gekennzeichnet ist durch**:

dass die Definition dynamischer Kennwerte der Lenkreationskraft AT des Lenkdrehmoment-Rückkopplungs-Abschnittes (120) dermaßen durchgeführt wird, dass einem Verstärkungsfaktor einer Übertragungsfunktion in einem Frequenzband von Informationen, für das wünschenswert ist, an den Fahrer weitergeleitet zu werden, erlaubt wird, groß zu werden, wohingegen der Verstärkungsfaktor der Übertragungsfunktion in dem Frequenzband von Informationen, für das es nicht wünschenswert ist, an den Fahrer weitergeleitet zu werden, erlaubt wird, klein zu sein.

3.  Elektrische Servolenkvorrichtung nach Anspruch 1 oder 2, wobei die Definition statischer Kennwerte des Lenkdrehmoment-Rückkopplungs-Abschnittes (120) basierend auf der Lenkreaktionskraft AT und dem Ausgleichsdrehmoment-Schätzwert festgelegt wird.

4.  Elektrische Servolenkvorrichtung nach irgendeinem der Ansprüche 1 bis 3,
    wobei es einem Kennwert einer Steuerung, in welche eine Abweichung zwischen dem Lenkdrehmoment und einem Ausgang des Lenkdrehmoment-Rückkopplungsabschnittes eingegeben wird, erlaubt wird, ein Proportionalitätsfaktor in einem niedrigen Bereich und ein Abschaltfaktor in einem hohen Bereich zu sein, ohne einen Integralfaktor zu enthalten.

## Revendications

1.  Appareil de direction assistée électrique qui commande un moteur (20) qui donne une force d'assistance de direction à un mécanisme de direction en fonction d'une valeur de contrôle de courant électrique qui est calculée à partir d'une valeur de commande de courant électrique de moteur (Ir) qui a été calculée par un dispositif de calcul en fonction d'un couple de direction généré dans un arbre de direction (2) et une valeur de courant électrique du moteur, et comprend :

    une section d'estimation de couple d'autoalignement (110) qui estime un couple d'autoalignement (ES) par une constitution d'observation de perturbation, et
    une section de rétroaction de couple de direction (120) qui calcule une force de réaction de direction (AT) en fonction de la valeur estimée de couple d'autoalignement (ES) qui a été estimée par la section d'estimation de couple d'auto-alignement (110) et renvoie le résultat au couple de direction,
    ledit appareil de direction assistée électrique est **caractérisé en ce que** :

    la définition des caractéristiques dynamiques de la force de réaction de direction (AT) de la section de rétroaction de couple de direction (120) est réalisée de sorte qu'un gain d'une fonction de transmission dans une bande de fréquence d'information que l'on souhaite transporter jusqu'à un conducteur peut être important, alors que le gain de la fonction de transmission dans la bande de fréquence d'information que l'on ne souhaite pas transporter jusqu'à un conducteur peut être petit.

2.  Appareil de direction assistée électrique, qui commande un moteur (20) qui donne une assistance de direction à un mécanisme de direction en fonction d'une valeur de contrôle de courant électrique qui est calculée à partir d'une valeur de commande de courant électrique de moteur (Ir) qui a été calculée par un dispositif de calcul en fonction d'un couple de direction généré dans un arbre de direction (2) et une valeur de courant électrique du moteur, et comprend :

    une section d'estimation de couple d'auto-alignement (110) qui estime un couple d'auto-alignement (ES) à partir d'un signal de rotation de moteur ou d'un signal de vitesse angulaire (w) et la valeur de commande de courant électrique de moteur (Ir), et
    une section de rétroaction de couple de direction (120) qui calcule une force de réaction de direction (AT) sur la valeur estimée de couple d'auto-alignement (ES) qui a été estimée par la section d'estimation de couple d'auto-alignement (110) et renvoie le résultat au couple de direction,
    ledit appareil de direction assistée électrique est **caractérisé en ce que** :

    la définition des caractéristiques dynamiques de la force de réaction de direction (AT) de la section de rétroaction de couple de direction (120) est réalisée de sorte qu'un gain d'une fonction de transmission dans une bande de fréquence d'information que l'on souhaite transporter jusqu'à un conducteur peut être important, alors que le gain de la fonction de transmission dans la bande de fréquence d'information que l'on ne souhaite pas transporter jusqu'à un conducteur peut être petit.

3. Appareil de direction assistée électrique selon la revendication 1 ou 2, dans lequel la définition des caractéristiques statiques de la section de rétroaction de couple de direction (120) est déterminée en fonction de la force de réaction de direction AT et de la valeur estimée de couple d'autoalignement.

4. Appareil de direction assistée électrique selon l'une quelconque des revendications 1 à 3, dans lequel une caractéristique d'un contrôleur dans lequel une différence entre le couple de direction et un résultat de la section de rétroaction de couple de direction est introduite, peut être un facteur proportionnel dans une plage basse et un facteur de coupure dans une plage haute, sans contenir de facteur intégral.

# FIG. 1

EP 1 470 987 B1

# FIG. 2

Frequency [Hz]

# FIG. 3

# FIG. 4

# FIG. 5

STEERING
REACTION
FORCE

SAT

# FIG. 6

T-bar
Torque [N × m]

④
③
①　②

Input shaft and
Pinion Angle [Degree]

Time [sec]

# FIG. 7

EP 1 470 987 B1

FIG. 8

16

# FIG. 9

FIG. 10

# FIG. 11

K(s)

(A)

Gain [dB]

(B)

Phase [degree]

Frequency [Hz]

# FIG. 12

(A)

T-bar
Torque [N x m]

50 (c)
(d)
10
1 (b) (a)
1/150

(B)

Input shaft and
Pinion Angle [Degree]

10 (c) 1 (b) (d) (a)
50 1/150

Time [sec]

**EP 1 470 987 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 8290778 A

- EP 1138578 A